## Europäisches Patentamt
## European Patent Office
## Office européen des brevets

(11) Veröffentlichungsnummer: **0 036 437**
**B1**

(12)

# EUROPÄISCHE PATENTSCHRIFT

(45) Veröffentlichungstag der Patentschrift:
18.07.84

(51) Int. Cl.³: **G 05 B 11/42,** G 05 B 13/02,
G 05 B 5/01

(21) Anmeldenummer: 80101954.8

(22) Anmeldetag: 11.04.80

(54) Regelverfahren und Schaltung zum Ausüben des Verfahrens.

(30) Priorität: 19.03.80 CH 2156/80

(43) Veröffentlichungstag der Anmeldung:
30.09.81 Patentblatt 81/39

(45) Bekanntmachung des Hinweises auf die Patenterteilung:
18.07.84 Patentblatt 84/29

(84) Benannte Vertragsstaaten:
DE FR SE

(56) Entgegenhaltungen:
DE - A - 1 909 627
DE - B - 1 588 276
DE - B - 1 673 601
US - A - 3 819 999
US - A - 3 880 348
US - A - 4 090 121

(73) Patentinhaber: GEBRÜDER SULZER
AKTIENGESELLSCHAFT, Zürcherstrasse 9,
CH-8401 Winterthur (CH)

(72) Erfinder: Herzog, Rudolf, bei der Kirche, CH-9555 Tobel
(CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

## Beschreibung

Die Erfindung betrifft ein Verfahren zum Regeln von träge reagierenden Anlagen bei raschen Sollwertänderungen mittels eines mindestens einen separaten Integral(I)-Teil aufweisenden Reglers, wobei eine aus Istwert und Sollwert gebildete Regelabweichung dem I-Teil und überdies der Sollwert einem eigenen Proportionalglied zugeführt werden und wobei die Ausgangssignale des I-Teils und des Proportionalgliedes auf die Regelstrecke einwirken.

Es ist ein solches Regelverfahren aus CH-B 5 90 401 bekannt, bei dem in den Weg zwischen dem Sollwertgeber und dem I-Teil des Reglers ein Zeitglied eingeschaltet ist, so daß das Sollwertsignal dem I-Teil verzögert zugeführt wird. Dieses Verfahren bringt eine erhebliche Verbesserung der Regelgüte, bedingt jedoch, daß man quantitativ die Charakteristik der Regelstrecke kennen muß, da das Zeitglied grob an diese Charakteristik angepaßt werden muß. Im allgemeinen ist auch der apparative Aufwand für das Zeitglied relativ aufwendig.

Es ist Aufgabe der Erfindung, das Regelverfahren der eingangs genannten Art so zu verbessern, daß durch rasche Sollwertänderungen bedingte Regelstörungen vermieden werden, ohne daß die genannten Nachteile auftreten.

Diese Aufgabe wird dadurch gelöst, daß der zeitliche Gradient des Sollwertes bestimmt wird und daß, sobald und mindestens solange dieser Gradient einen gegebenen positiven Grenzwert überschreitet oder einen gegebenen negativen Grenzwert unterschreitet, der I-Teil (11) blockiert und somit sein Ausgangssignal festgehalten wird. Bei diesem Verfahren wird also bei einer sprunghaften Änderung des Sollwertes für eine bestimmte, relativ kurze Zeit der I-Teil blockiert, d. h. der Signalfluß zum Eingang des I-Teils unterbrochen und damit das Ausgangssignal dieses I-Teils festgehalten. Während der Blockierungszeit kann sich die Sollwertänderung über das Proportionalglied voll am Ausgang der Regelstrecke auswirken. Das Blockieren des I-Teils hat sich als besser erwiesen als das mehr oder weniger unrichtige Weiterarbeitenlassen. Das erfindungsgemäße Verfahren hat den Vorteil, daß im Falle einer starken Sollwertänderung Regelschwingungen vermieden werden, ohne daß die Regelgüte vermindert wird, wenn auf die Regelstrecke noch andere Störungen direkt einwirken. Es ist besonders dann vorteilhaft, wenn sich die Charakteristik der Regelstrecke, beispielsweise in Funktion der Last, verändert.

Aus DE-B 16 73 601 ist ein PI-Regler für eine trägheitsbehaftete Regelstrecke bekannt, der einer anderen Gattung als der gemäß CH-B 5 90 401 angehört, da bei ihm der Sollwert nicht einem eigenen Proportionalglied zugeführt wird. Beim bekannten Regler wird die Regelabweichung differenziert und bei Erreichen eines bestimmten Grenzwertes der I-Teil unterbrochen, wonach der Regler als reiner P-Regler weiterarbeitet. Dieser Wechsel der Arbeitsweise des Reglers findet dann auch bei solchen auf die Regelstrecke wirkenden Störungen statt, die nicht durch rasche Sollwertänderungen bedingt sind.

Aus DE-A 19 09 627 ist eine Regeleinrichtung mit Dreipunktschalter für Regelstrecken mit kleiner Zeitkonstante bekannt. Diese Einrichtung weist zwei parallelgeschaltete, je von der Regelabweichung beaufschlagte Regler auf, von denen der eine auch I-Charakter aufweisende Regler die Regelabweichungen innerhalb eines durch die Ansprechgrenzen des Dreipunktschalters gegebenen Bereiches ausregelt, wogegen der andere, P-Charakter aufweisende Regler nur dann auf die Regelstrecke einwirkt, wenn der Absolutwert der Regelabweichung einen durch die Ansprechgrenzen des Dreipunktschalters gegebenen Wert überschreitet. Auch diese Regeleinrichtung arbeitet nach einem anderen Verfahren als die Erfindung, denn es fehlt ein Proportionalglied, dem der Sollwert zugeführt wird.

In ähnlicher Weise ist die Regeleinrichtung gemäß US-A 38 19 999 ausgebildet, bei der ein P-Regler und ein Integralregler parallelgeschaltet sind und dem Eingang jedes Reglers die Regelabweichung zugeführt wird. Die Ausgänge der beiden Regler wirken über eine Additionsstelle auf einen Stellmotor, bei dessen Sättigung der Integralregler abgeschaltet wird.

Die Erfindung betrifft ferner eine Regelschaltung zum Ausüben des Verfahrens, mit einem einen separaten I-Teil aufweisenden Regler, der einerseits vom Istwert der Regelstrecke und andererseits von einem Sollwert über einen Subtraktionspunkt beaufschlagt wird und dessen Ausgang auf die Regelstrecke einwirkt, wobei ferner von einem Sollwertgeber aus, der auf den genannten Subtraktionspunkt einwirkt, ein Sollwertsignal über ein Proportionalglied zusätzlich auf die Regelstrecke einwirkt. Die Schaltung ist dadurch gekennzeichnet, daß zwischen dem Subtraktionspunkt und dem I-Teil Blockierungsmittel vorgesehen sind, die vom Sollwertgeber aus über ein auf Änderungen ausschließlich des Sollwertes ansprechendes, ein D-Glied zum Bestimmen des zeitlichen Gradienten des Sollwertes aufweisendes Organ derart beeinflußt werden, daß das I-Teil blockiert und somit sein Ausgangssignal festgehalten wird, sobald und mindestens solange der vom D-Glied bestimmte Gradient einen gegebenen positiven Grenzwert überschreitet oder einen gegebenen negativen Grenzwert unterschreitet. Diese Schaltung hat den zusätzlichen Vorteil der leichten Einstellbarkeit an die Charakteristik der Regelstrecke und gegebenenfalls an Änderungen dieser Charakteristik, zum Beispiel in Funktion der Last.

Eine apparativ besonders zweckmäßige Weiterbildung der erfindungsgemäßen Regelschaltung, durch die auf ein mechanisches Relais verzichtet werden kann, weist die Merkmale auf, daß der Ausgang des D-Gliedes an den Eingang eines Zweiweggleichrichter-Begrenzers angeschlossen ist, der ein auf eine Einheit begrenztes Ausgangssignal an einen Inverter abgibt, und daß der Ausgang des Inverters auf den einen Eingang eines Multiplikators geschaltet ist, und dessen anderem Eingang die Differenz aus Sollwert und Istwert geschaltet ist und dessen Ausgang mit dem Eingang des I-Teils verbunden ist.

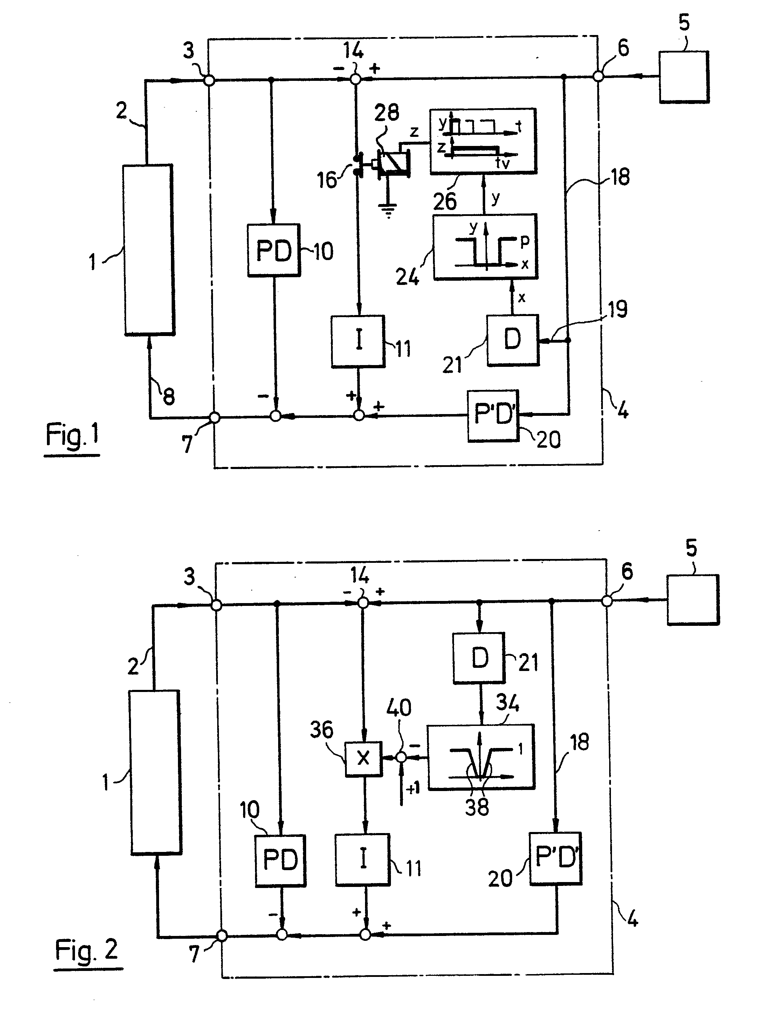

Die Erfindung wird nun an zwei schematisch dargestellten Ausführungsbeispielen näher erläutert, wobei Fig. 1 und 2 je eine Regelschaltung zeigen.

Eine Regelstrecke 1 ist ausgangsseitig über eine Leitung 2 mit einem Istwerteingang 3 eines Reglers 4 verbunden. Der Regler 4 weist ferner einen an einem Sollwertgeber 5 angeschlossenen Sollwerteingang 6 sowie einen Ausgang 7 auf, der über eine Leitung 8 mit dem Eingang der Regelstrecke 1 verbunden ist. Der Regler 4 enthält einen P-Teil 10 und einen I-Teil 11.

Der P-Teil 10 hat im vorliegenden Beispiel zusätzlich D-Charakter; er könnte aber auch reinen P-Charakter aufweisen. Er ist direkt am Reglereingang 3 angeschlossen und mit negativem Vorzeichen auf den Ausgang 7 des Reglers geschaltet. Für den I-Teil 11 wird durch Subtraktion der über die beiden Reglereingänge 3 und 6 eingeführten Signale in einem Subtraktionspunkt 14 eine Regelabweichung gebildet. Diese wird über einen Schalter 16 dem I-Teil 11 zugeführt, dessen Ausgang sodann, additiv zum Ausgang des P-Gliedes 10, dem Ausgang 7 des Reglers zugeführt wird.

Vom Sollwerteingang 6 des Reglers 4 führt ferner eine Verbindungsleitung 18 zu einem P-Glied 20, das eine vom P-Teil 10 verschiedene Charakteristik, beispielsweise P'D' aufweist. Der Ausgang des P-Gliedes 20 führt ebenfalls, additiv, zum Ausgang 7 des Reglers. Von der Verbindungsleitung 18 zweigt eine Leitung 19 ab, die zu einem D-Glied 21 führt. Der Ausgang dieses D-Gliedes 21 ist mit x bezeichnet. Er wird einem Wandler 24 zugeführt, der gleichzeitig die Funktion eines Zweiweggleichrichters und eines Signalbegrenzers ausübt: Übersteigt x eine vorbestimmte positive oder negative Größe, so nimmt der Ausgang y des Wandlers 24 einen bestimmten positiven Wert p an, während er sonst Null beträgt. Der Ausgang y des Wandlers 24 wird sodann einem Dehnglied 26 zugeführt, in welchem das Signal y auf eine einstellbare Dauer tv gedehnt wird. Das so gebildete Signal z steuert ein Relais 28, das den Schalter 16 umfaßt und diesen für die Dauer tv des Signals z ausschaltet, während es sonst eingeschaltet ist.

Mit der so gebildeten Schaltung wird bei einer Sprungänderung des Sollwertes der Eingang des I-Teils 11 für die Dauer tv durch den Schalter 16 blockiert, und somit der Ausgang des I-Teils 11 solange festgehalten. Der Zeitabschnitt tv ist so bemessen, daß die über das P-Glied 20 auf die Regelstrecke 1 gegebene Störung sich am Ausgang der Regelstrecke voll auswirken kann, bevor der I-Teil 11 wieder eingeschaltet wird. War das P-Glied 20 richtig bemessen und hat während des Zeitabschnittes tv keine Störung dritter Art auf die Regelstrecke 1 eingewirkt, so geht die Regelabweichung an der Stelle 14 mit Ablauf des Zeitabschnittes tv auf 0 zurück. Andernfalls beginnt jetzt der I-Teil zu arbeiten, ohne daß ein Überschwingen auftritt.

Gemäß Fig. 2 ist anstelle des Schalters 16 von Fig. 1 ein Multiplikationsorgan 36 angeordnet. Der Ausgang des D-Gliedes 21 führt auf einen Wandler 34, der im wesentlichen dem Zweiweggleichrichter-Begrenzer 24 entspricht, dessen Charakteristik jedoch statt vertikaler Flanken geneigte Flanken 38 aufweist und der das Ausgangssignal auf einen Einheitswert begrenzt. Der Ausgang des Wandlers 34 wird einem Inverter 40 zugeführt, in dem die Differenz zu einem positiven Einheitssignal +1 bestimmt wird. Die so gebildete Differenz wird sodann dem Multiplikationsorgan 36 als Faktor zugeführt.

Die Einrichtung funktioniert wie folgt: Bei einer sprunghaften Änderung des Sollwertes produziert das D-Glied 21 ein scharf ansteigendes, mehr oder weniger rasch abklingendes Dreieck-Signal, das im Gleichrichter 34 zu einem trapezförmigen Signal umgearbeitet und dem Inverter 40 als vom Einheitssignal +1 abzuzählende Größe zugeführt wird. Steht an der Subtraktionsstelle 40 vom Wandler 34 her das Ausgangssignal Null an, so gibt das Multiplikationsorgan 36 die im Subtraktionspunkt 14 gebildete Regelabweichung unverändert an den I-Teil 11 weiter. Steht jedoch vom Wandler 34 her ein zeitlich trapezförmig verlaufendes Signal an, so wird das Multiplikationsorgan für den Durchgang der Regelabweichung zunächst voll gesperrt und sodann rampenartig geöffnet.

Im Prinzip arbeitet die Schaltung nach Fig. 2 ähnlich wie jene nach Fig. 1; sie weist jedoch den Unterschied auf, daß bei stärkeren Sprungstörungen des Sollwertes das I-Glied 11 für längere Zeit ausgeschaltet bleibt als bei schwächeren.

In beiden Fällen wird bei einer rampenartigen Sollwertänderung das I-Glied etwas länger blokkiert als die Verstellung des Sollwertes dauert.

Selbstverständlich kann auch bei gewissen Regelaufgaben auf einen P-Teil 10 verzichtet werden, ohne daß dessen Funktion vom P-Glied 20 übernommen würde.

**Patentansprüche**

1. Verfahren zum Regeln von träge reagierenden Anlagen bei raschen Sollwertänderungen mittels eines mindestens einen separaten Integral(I)-Teil aufweisenden Reglers, wobei eine aus Istwert und Sollwert gebildete Regelabweichung dem I-Teil und überdies der Sollwert einem eigenen Proportionalglied zugeführt werden und wobei die Ausgangssignale des I-Teils und des Proportionalgliedes auf die Regelstrecke einwirken, dadurch gekennzeichnet, daß der zeitliche Gradient des Sollwertes bestimmt wird und daß, sobald und mindestens solange dieser Gradient einen gegebenen positiven Grenzwert überschreitet oder einen gegebenen negativen Grenzwert unterschreitet, der I-Teil (11) blockiert und somit sein Ausgangssignal festgehalten wird.

2. Regelschaltung zum Ausüben des Verfahrens nach Anspruch 1, mit einem einen separaten I-Teil aufweisenden Regler, der einerseits vom Istwert der Regelstrecke und andererseits von einem Sollwert über einen Subtraktionspunkt beaufschlagt wird und dessen Ausgang auf die Regelstrecke einwirkt, wobei ferner von einem Sollwertgeber aus, der auf den genannten Subtraktionspunkt einwirkt, ein Sollwertsignal über ein Proportionalglied zusätzlich auf die Regelstrecke einwirkt, dadurch gekennzeichnet, daß zwischen dem Subtraktionspunkt (14) und dem I-Teil (11) Blockierungsmittel (16; 36) vorgesehen sind, die vom Sollwertgeber (5) aus über ein auf Änderungen ausschließlich des Sollwertes ansprechendes, ein D-Glied (21) zum Bestimmen des zeitlichen Gradienten des Sollwertes aufweisendes Organ (24, 26, 28; 34, 40) derart beeinflußt werden, daß das I-Teil (11) blockiert und somit sein Ausgangssignal festgehalten wird, sobald und mindestens solange der vom D-Glied (21) bestimmte Gradient einen gegebenen positiven Grenzwert überschreitet oder einen gegebenen negativen Grenzwert unterschreitet.

3. Regelschaltung nach Anspruch 2, dadurch gekennzeichnet, daß der Ausgang des D-Gliedes (21) an den Eingang eines Zweiweggleichrichter-Begrenzers (34) angeschlossen ist, der ein auf eine Einheit begrenztes Ausgangssignal an einen Inverter (40) abgibt, und daß der Ausgang des Inverters (40) auf den einen Eingang eines Multiplikators (36) geschaltet ist, auf dessen anderem Eingang die Differenz aus Sollwert und Istwert geschaltet ist und dessen Ausgang mit dem Eingang des I-Teils (11) verbunden ist.

**Claims**

1. A method of controlling sluggishly reacting plants in the event of abrupt set-value variations by means of a controller having at least one separate integral (I) element, an error signal which is formed from the actual value and set value being supplied to the I-element and the set value also being supplied to its own proportional element, the output signals of the I-element and proportional element acting on the controlled system, characterized in that the time gradient of the set value is determined and as soon as, and for at least as long as, the gradient overshoots a given positive limit value or undershoots a given negative limit value, the I-element (11) is blocked and its output signal is therefore fixed.

2. A control circuit arrangement for carrying out the method according to claim 1, the arrangement having a controller which has a separate I-element and receives by way of a subtraction point the actual value of the plant and a set value, the controller output acting on the plant, a set-value pickoff which acts on the subtraction point delivering by way of a proportional element a set-value signal which also acts on the plant, characterized by the provision between the subtraction point (14) and the I-element (11) of blocking means (16; 36) which the pickoff (5) so acts on, by way of an element (24, 26, 28; 34, 40) responding only to set-value variations and having a D-element (21) to determine the time gradient of the set value, that the I-element (11) is blocked and its output signal is therefore fixed as soon as, and for at least as long as, the gradient determined by the D-element (21) overshoots a given positive limit value or undershoots a given negative limit value.

3. A circuit arrangement according to claim 2, characterized in that the output of the D-element (21) is connected to the input of a full-wave rectifier limiter (34) delivering to an inverter (40) an output signal limited to a unity; and the inverter output is connected to one input of a multiplier (36) to whose other input the difference between the set value and the actual value is applied and whose output is connected to the input of the I-element (11).

**Revendications**

1. Procédé pour réguler des installations à réaction lente lors de variations brusques de valeurs nominales au moyen d'un régulateur présentant au moins une partie séparée intégrale I, une déviation de régulation formée de la valeur réelle et de la valeur nominale étant alors appliquée à la partie I et en outre la valeur nominale étant appliquée à un élément spécifique proportionnel et des signaux de sortie de la partie I et de l'élément proportionnel agissant sur l'intervalle de régulation, caractérisé en ce que le gradient relatif au temps de la valeur nominale est déterminé et en ce que dès que et au moins aussi longtemps que ce gradient dépasse une valeur limite positive donnée ou bien se trouve en dessous d'une valeur limite négative donnée, la partie I (11) est bloquée et ainsi son signal de sortie est maintenu.

2. Circuit de régulation pour mettre en oeuvre le procédé selon la revendication 1, comprenant un régulateur présentant une partie I séparée, qui réagit d'une part à la valeur réelle de l'intervalle de régulation et d'autre part à une valeur nominale par l'intermédiaire d'un point de soustraction et dont la sortie influe sur l'intervalle de régulation, tandis qu'en outre, depuis un générateur de valeur nominale qui agit sur le point de soustraction mentionné, un signal de valeur nominale influe par l'intermédiaire d'un élément proportionnel additionnellement sur l'intervalle de régulation, caractérisé en ce que, entre le point de soustraction (14) et la partie I (11), on prévoit des moyens de blocage (16; 36) qui, depuis le générateur de valeur nominale (5), sont influencés par l'intermédiaire d'un organe (24, 26, 28; 34, 40) répondant à des variations à l'exclusion de la valeur nominale et présentant un élément D (21) pour déterminer le gradient relatif au temps de la valeur nominale, de telle manière que la partie I (11) soit bloquée et ainsi que son signal de sortie soit maintenu, dès que, et au moins aussi longtemps que le gradient déterminé par l'élément D (21) dépasse une valeur limite positive donnée ou bien se trouve en dessous d'une valeur limite négative donnée.

3. Circuit de régulation selon la revendication 2, caractérisé en ce que la sortie de l'élément D (21) est raccordée sur l'entrée d'un limiteur (34) à redresseur à deux voies qui délivre à un inverseur (40) un signal de sortie limité à une unité, et en ce que la sortie de l'inverseur (40) est montée sur une des entrées d'un multiplicateur (36) sur l'autre entrée duquel se trouve la différence entre la valeur nominale et la valeur réelle, tandis que sa sortie est reliée à l'entrée de la partie I (11).

Fig.1

Fig. 2